# FASCICULE DE BREVET EUROPEEN

(11) **EP 3 078 527 B1**
(45) Date de publication et mention de la délivrance du brevet: **03.01.2018**
(21) Numéro de dépôt: 16159768.7
(22) Date de dépôt: 11.03.2016
(51) Int. Cl.: B60K 5/12

(54) **DISPOSITIF DE DETROMPAGE POUR LE MONTAGE CORRECT D'UNE BIELLETTE ANTI-COUPLE NON SYMETRIQUE DANS LE BERCEAU D'UN VEHICULE**
VERWECHSLUNGSSICHERUNG FÜR DIE KORREKTE MONTAGE EINER NICHT-SYMMETRISCHEN DREHMOMENTSTÜTZE IM HILFSRAHMEN EINES FAHRZEUGS
FALSE MOUNTING PREVENTION DEVICE FOR CORRECT MOUNTING OF A NON-SYMMETRICAL ANTI-TORQUE ROD IN THE AUXILIARY FRAME OF A VEHICLE

(30) Priorité: 10.04.2015 FR 1553118
(43) Date de publication de la demande: 12.10.2016
(73) Titulaire: PSA Automobiles SA, 78300 Poissy (FR)
(72) Inventeur: CHALVET, Manuel, 75015 PARIS (FR); MAROILLE, Sylvain, 94120 FONTENAY SOUS BOIS (FR); ROUSSEAU, Loic, 91570 BIEVRES (FR); FOUBERT, Antoine, 25700 VALENTIGNEY (FR)

(56) Documents cités:
- EP-A1- 2 690 309
- JP-A- 2014 055 671
- US-A1- 2005 212 188
- US-A1- 2015 008 305

## Description

La présente invention concerne un dispositif de détrompage pour le montage correct d'une biellette anti-couple non symétrique dans le berceau d'un véhicule. Elle concerne aussi une biellette anti-couple équipée d'un tel dispositif de détrompage.

Une biellette anti-couple peut servir à la suspension d'un moteur automobile, et en particulier à une suspension de type pendulaire, dans laquelle les mouvements de rotation du groupe motopropulseur suivant un axe parallèle, ou quasi-parallèle, à son vilebrequin sont limités par une ou plusieurs biellettes de reprise de couple ou « biellettes anti-couple » disposée(s) entre le moteur et la caisse du véhicule.

Une biellette anti-couple comprend traditionnellement deux articulations élastiques insérées dans une armature, le plus souvent métallique, constituant le corps de biellette. L'une d'elle, de petite taille et de forte rigidité, joue le rôle de pivot. La seconde articulation, de volume plus important et de rigidité plus faible, couramment appelée « grosse articulation » a pour fonction la limitation progressive des débattements et le filtrage des vibrations entre le moteur et le châssis du véhicule.

Les biellettes anti-couple sont, le plus souvent, symétriques et, par conséquent, leur montage, en particulier le montage de leur grosse articulation dans un élément de châssis du véhicule, peut être effectué dans les deux sens.

Il en est différemment lorsque les biellettes ne sont pas des biellettes symétriques, telles les biellettes inclinées, par exemple. Pour ces biellettes non symétriques, un sens de montage s'impose, parce qu'un mauvais sens de montage serait préjudiciable au fonctionnement de la pièce, notamment en terme d'usure et de vibrations. De plus, lorsqu'une biellette anti-couple non symétrique est montée dans le mauvais sens cela a pour conséquence d'entraîner des temps supplémentaires de rattrapage de l'erreur sur la ligne de montage ou sur le véhicule même en fin de ligne de montage.

On connaît déjà de nombreuses biellettes anti-couple non symétriques, qui présentent des éléments de forme susceptibles de protéger leur bon fonctionnement.

Ainsi, à titre d'exemple, le document EP 1 666 296 B1 décrit une biellette anti-couple non symétrique pour supporter un moteur de véhicule, comprenant une paire de bagues, une partie de tige reliant la paire de bagues, la paire de bagues et la partie de tige étant formées d'un seul tenant à partir d'un matériau en résine ou en métal, et des cylindres intérieurs qui sont insérés dans la paire de bagues, respectivement, par l'intermédiaire de corps élastiques en caoutchouc. La partie de tige est fourchue sous la forme de deux parties de ramification. L'une des parties de ramification est plus grande et l'autre plus étroite. Une cavité est formée de façon à s'étendre au voisinage de l'extrémité de pointe de l'autre des deux parties de ramification, de façon à former une forme asymétrique vis-à-vis de la paire de bagues afin de produire une différence de rigidité. La partie de tige du côté ayant une faible rigidité est rompue lorsqu'une charge prédéterminée est appliquée à celle-ci de façon à provoquer le déplacement du moteur dans une direction prédéterminée.

Le document EP 2 690 309 A1, qui est considéré de représenter l'état de la technique le plus proche de l'objet de l'invention, décrit une biellette anti-couple non symétrique, qui comprend une première partie annulaire, une seconde partie annulaire, une partie d'étai de raccordement qui relie la première partie annulaire et la seconde partie annulaire, un premier élément de fixation qui est relié par l'intermédiaire d'un premier corps élastique en caoutchouc à l'intérieur de la première partie annulaire, et un second élément de fixation qui est connecté par l'intermédiaire d'un deuxième corps élastique en caoutchouc à l'intérieur de la seconde partie annulaire. La partie d'étai de raccordement comprend une partie supérieure de fourche, qui est renforcée par des nervures, et une partie inférieure de fourche, la résistance à la flexion de la partie inférieure de fourche étant inférieure à celle de la partie supérieure de fourche. Une cavité, à laquelle une partie de la première partie annulaire est exposée, est formée entre la partie supérieure de fourche et la partie inférieure de fourche. Une partie en forme de paroi mince, qui comporte une excroissance transversale, est située dans une région de la première partie annulaire exposée à la cavité. Une surface inclinée, dont le côté inférieur s'incline vers la seconde partie annulaire, est formée dans une région de la cavité opposée à la première partie annulaire.

Le but de la présente invention est de fournir un dispositif de détrompage, qui empêche le positionnement de la biellette anti-couple dans le mauvais sens lors du montage de celle-ci dans le berceau d'un véhicule.

Un autre but de la présente invention est de fournir un tel dispositif de détrompage, qui soit d'impact négligeable sur la masse et le prix de revient de la biellette anti-couple.

Enfin, c'est également un but de la présente invention de fournir un tel dispositif de détrompage, qui soit de conception et de fabrication simples, qui soit robuste, fiable et économique.

Pour parvenir à ces buts, la présente invention a pour objet un dispositif de détrompage pour le montage correct d'une biellette anti-couple non symétrique dans le berceau d'un véhicule, la biellette anti-couple comprenant un insert qui est destiné à être inséré entre deux plaques formant chape du berceau et qui comporte un alésage pour le passage d'une vis de fixation de la biellette anti-couple dans le berceau, l'une des deux plaques présentant un bord d'approche plus avancé que le bord d'approche de l'autre plaque selon la direction d'insertion de la biellette anti-couple dans le berceau, et ce dispositif de détrompage, nouveau, est constitué par une contre forme, qui est en saillie de la surface externe de l'insert, de telle sorte que ladite contre forme vient heurter la plaque de bord d'approche plus avancé lorsque la biellette anti-couple est dans le mauvais sens, ce qui rend impossible le montage incorrect de la biellette anti-couple dans le berceau.

Selon le mode préféré de réalisation de l'invention, la contre forme est positionnée sur la partie de l'insert qui est dirigée du côté de la petite articulation de la biellette anti-couple.

L'insert peut avantageusement être métallique et réalisé par moulage et la contre forme peut également être métallique, « monobloc » avec l'insert et obtenue par la même opération de moulage que l'insert.

En variante, l'insert métallique peut être réalisé par un procédé d'extrusion.

Que l'insert soit réalisé par moulage ou par extrusion, la contre forme peut être réalisée sous la forme d'un bourrelet en élastomère fixé au-dessus d'une des faces de l'insert.

La contre forme peut avantageusement être inclinée.

La présente invention a aussi pour objet une biellette anti-couple non symétrique de véhicule, en particulier de véhicule automobile, qui relie le groupe motopropulseur du véhicule au berceau du véhicule et qui comporte un dispositif de détrompage conforme à celui décrit ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue schématique, représentant un montage dans le bon sens d'une biellette anti-couple non symétrique dans le berceau d'un véhicule, la biellette étant pourvue d'un dispositif de détrompage selon la présente invention,
- la figure 2 est une vue schématique semblable à celle de la figure 1, mais dans laquelle la biellette anti-couple non symétrique est montée dans le mauvais sens,
- la figure 3 est une vue en perspective, schématique, représentant un exemple de réalisation du dispositif de détrompage selon l'invention sur une biellette anti-couple non symétrique,
- la figure 4 est une vue schématique, illustrant un montage dans le mauvais sens d'une biellette anti-couple dans un berceau en acier d'un véhicule, la biellette étant pourvue d'un dispositif de détrompage selon la présente invention, et
- la figure 5 est une vue schématique, illustrant un montage dans le mauvais sens d'une biellette anti-couple dans un berceau en aluminium d'un véhicule, la biellette étant pourvue d'un dispositif de détrompage selon la présente invention.

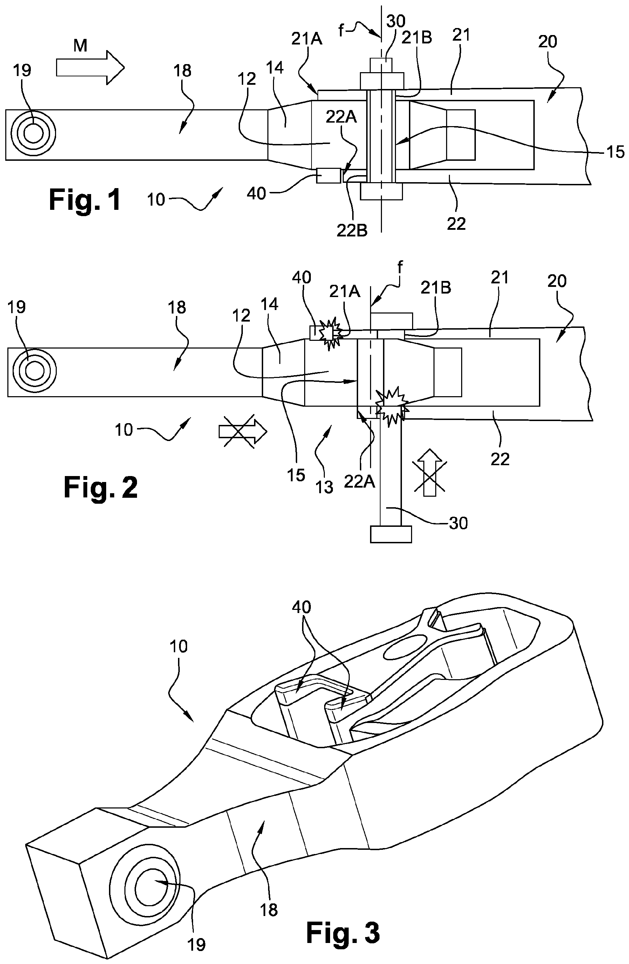

En référence au dessin de la figure 1, on a représenté, de façon très schématique, une biellette anti-couple non symétrique, de référence générale 10, montée sur le berceau, de référence générale 20, d'un véhicule automobile. La biellette 10 comporte, de façon classique, une grosse articulation 13 (désignée sur la figure 2), une petite articulation 19 et un corps de biellette 18, qui relié la petite articulation 19 à la grosse articulation 13. La grosse articulation 13, qui comprend un insert métallique 12 inséré dans une armature en élastomère 14, est prise en chape entre deux plaques 21 et 22 du berceau 20. Dans cette position de montage correct de la biellette 10 dans la chape 21, 22 du berceau 20, l'alésage central 15 d'axe « f » de l'insert 12 se trouve en alignement des alésages 21B et 22B des plaques 21, respectivement 22, ce qui permet le passage d'une vis de fixation 30 de la biellette sur le berceau 20. On notera que la plaque 21 présente un bord d'approche 21A plus avancé que le bord d'approche 22A de la plaque 22 selon la direction d'insertion (illustrée par la flèche « M » sur la figure 1) de la biellette anti-couple 10 dans le berceau 20.

Selon le principe même de la présente invention, il est prévu une contre forme, désignée par la référence numérique 40, qui est en saillie de la surface externe de l'insert métallique 12 et qui est dirigée sensiblement selon l'axe «f » de l'alésage de passage 15 de la vis de fixation 30.

La fonction de cette contre forme 40 est de venir heurter une des deux plaques, plus précisément le bord d'approche 21A de la plaque 21, lorsque la biellette anti-couple non symétrique 10 est dans le mauvais sens de montage et d'empêcher, ainsi, le coulissement de la biellette 10 jusqu'à sa position nominale, comme illustré sur le schéma de la figure 2, et d'empêcher, par conséquent, la mise en place de la vis de fixation 30 dans l'alésage 15. A l'inverse, lorsque la biellette 10 est montée dans le bon sens, il est possible de positionner correctement cette dernière, aucun obstacle ne venant en contact avec le berceau (figure 1), la contre forme 40 venant se placer contre le bord d'approche 22A le moins avancé de la plaque 22, tel que représenté sur la figure 1.

Lorsque l'insert 12 est serré sur le berceau 20 par le serrage de la vis de fixation 30, il est rendu immobile par rapport au berceau, contrairement au corps de biellette 18 qui est susceptible de débattements par rapport au berceau 10. Ainsi, il est possible de placer la contre forme 40 sur l'insert 12 avec un jeu réduit avec le berceau en position nominale, le jeu restant ayant pour fonction de pallier les dispersions de procédé et de montage de la biellette et non le débattement de cette dernière.

L'insert métallique 12 peut être réalisé par extrusion, le contre forme 40 étant alors réalisée avec un bourrelet d'élastomère qui vient au-dessus d'une des faces de l'insert 12. Ce mode de réalisation de la contre forme 40 permet d'éviter d'avoir à faire un profilé d'insert plus épais, qui doit être ensuite usiné pour obtenir une face d'appui correcte avec la prise en chape du berceau.

En variante, l'insert métallique 12 peut être réalisé par moulage. Avec ce procédé d'obtention de l'insert, la contre forme 40 peut être réalisée en métal directement dans le moule de l'insert.

On notera que la réalisation évoquée ci-dessus d'un bourrelet en élastomère peut également être envisagée avec un insert 12 obtenu selon un procédé de moulage.

En référence au dessin de la figure 3, on a représenté une biellette anti-couple non symétrique, qui présente un insert extrudé et une contre forme 40 en élastomère débordant sur la face de l'insert.

Un des avantages d'une contre forme 40 en élastomère plutôt qu'en métal réside dans le fait qu'on peut réduire le jeu en position nominale entre l'insert 12 et le berceau 20. En effet, si on rencontre un contact entre le berceau 20 et la contre forme 40 du fait des dispersions dimensionnelles, on peut jouer sur une légère déformation de la contre forme 40 pour positionner correctement le biellette 10 dans la chape 21, 22 du berceau 20 et il n'y a pas de risque de vibrations en cas d'affleurement entre les deux. A l'inverse, on notera qu'une contre forme 40 en élastomère nécessite une raideur suffisante pour bloquer la biellette anti-couple 10 dans le mauvais sens de montage, notamment lorsqu'il s'agit d'un berceau en acier.

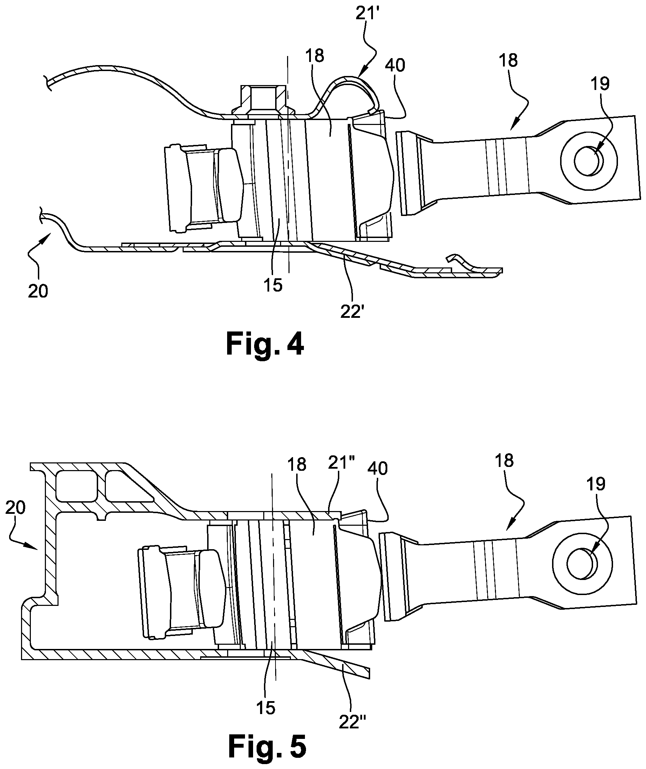

En référence aux dessins des figures 4 et 5, on a représenté le fonctionnement de la contre forme 40 en moyen de détrompage lors du montage d'une biellette anti-couple non symétrique dans un berceau en tôle d'acier (figure 4) et dans un berceau en aluminium (figure 5). Dans les deux figures, la biellette anti-couple 10 est dans le mauvais sens de montage, l'axe de la biellette étant incliné par rapport à l'axe de l'alésage 15 recevant la vis de fixation 30. Dans les deux cas, la contre forme 40 vient buter dans la partie haute du berceau, ce qui empêche l'insertion de la vis de fixation de la biellette sur le berceau.

De manière plus précise, on a représenté sur le dessin de la figure 4, la contre forme 40 du dispositif de détrompage venant heurter la plaque supérieure arrondie 21' de la chape du berceau réalisé en tôle d'acier, tandis que sur le dessin de la figure 5, la contre forme 40 du dispositif de détrompage vient heurter la plaque supérieure 21" de la chape du berceau obtenu par moulage en aluminium 20. Ainsi, dans les deux figures 4 et 5, la contre forme 40 est compatible avec la définition différente du berceau, à savoir le berceau en acier (figure 4) et le berceau en aluminium (figure 5), malgré les différences géométriques des parties hautes spécifiques du berceau en acier et en aluminium.

Dans les deux cas illustrés sur les figures 4 et 5, la géométrie de la partie basse de la chape du berceau, à savoir la plaque 22' pour le berceau en acier et la plaque 22" pour le berceau en aluminium, permet à la contre forme 40 de se placer en permettant le montage correct de la biellette anti-couple.

Le dispositif de détrompage décrit ci-dessus, présente de nombreux avantages, parmi lesquels les avantages suivants :
- il empêche, de façon sûre et efficace, le positionnement de la biellette anti-couple non symétrique dans le mauvais sens de montage, et apporte, ainsi, un gain substantiel au montage (pas de biellettes montées à l'envers sur des véhicules sur la route),
- il constitue une solution technique économique, ne nécessitant pas « d'outils méthode » additionnels, par conséquent ne nécessitant pas d'investissement additionnel en usine terminale de fabrication automobile, et cette solution technique est d'impact négligeable sur le prix de revient de la biellette,
- il n'ajoute pas de masse significative à la biellette, et
- il est fiable et robuste.

## Revendications

1. Dispositif de détrompage pour le montage correct d'une biellette anti-couple (10) non symétrique dans le berceau (20) d'un véhicule, la biellette anti-couple (10) comprenant un insert (12), qui est destiné à être inséré entre deux plaques (21, 22) formant chape du berceau (20) et qui comporte un alésage (15) pour le passage d'une vis de fixation (30) de la biellette anti-couple (10) dans le berceau (20), l'une des deux plaques (21) présentant un bord d'approche (21A) plus avancé que le bord d'approche (22A) de l'autre plaque (22) selon la direction d'insertion (« M ») de la biellette anti-couple (10) dans le berceau (20), ledit dispositif de détrompage étant constitué par une contre forme (40), qui est en saillie de la surface externe de l'insert (12), de telle sorte que ladite contre forme (40) vient heurter la plaque (21) de bord d'approche (21A) plus avancé lorsque la biellette anti-couple (10) est dans le mauvais sens, ce qui rend impossible le montage incorrect de la biellette anti-couple (10) dans le berceau (20).

2. Dispositif de détrompage selon la revendication 1, **caractérisé en ce que** la contre forme (40) est positionnée sur la partie de l'insert (12) dirigée du côté petite articulation (19) de la biellette anti-couple (10).

3. Dispositif de détrompage selon l'une quelconque des revendications 1 et 2, **caractérisé en ce que** l'insert (12) est métallique et réalisé par moulage.

4. Dispositif de détrompage selon la revendication 3, **caractérisé en ce que** la contre forme (40) est métallique, « monobloc » avec l'insert (12) et est obtenue par la même opération de moulage que l'insert.

5. Dispositif de détrompage selon l'une quelconque des revendications 1 et 2, **caractérisé en ce que** l'insert (12) est métallique et réalisé par extrusion.

6. Dispositif de détrompage selon l'une quelconque des revendications 3 et 5, **caractérisé en ce que** la contre forme (40) est réalisée sous la forme d'un bourrelet en élastomère fixé au-dessus d'une des faces de l'insert (12).

7. Dispositif de détrompage selon l'une quelconque des revendications 3 à 6, **caractérisé en ce que** la contre forme (40) est inclinée.

8. Biellette anti-couple non symétrique de véhicule, en particulier de véhicule automobile, qui relie le groupe motopropulseur du véhicule au berceau (20) du véhicule, **caractérisée en ce que** ladite biellette anti-couple (10) comporte un dispositif de détrompage conforme à l'une quelconque des revendications précédentes.

## Patentansprüche

1. Verwechslungssicherung für die korrekte Montage einer Nicht-symmetrischen Drehmomentstütze (10) in dem Hilfsrahmen (20) eines Fahrzeugs, wobei die Drehmomentstütze (10) einen Einsatz (12) umfasst, der dazu bestimmt ist, zwischen zwei Platten (21, 22), die eine Gabel des Hilfsrahmens (20) bilden, eingefügt zu werden, und eine Bohrung (15) für das Durchgehen einer Befestigungsschraube (30) der Drehmomentstütze (10) in dem Hilfsrahmen (20) umfasst, wobei eine der zwei Platten (21) einen Annäherungsrand (21A) aufweist, der weiter vorragt als der Annäherungsrand (22A) der anderen Platte (22) entlang der Einfügerichtung ("M") der Drehmomentstütze (10) in dem Hilfsrahmen (20), wobei die Verwechslungssicherung aus einer Gegenform (40) besteht, die von der äußeren Oberfläche des Einsatzes (12) derart vorragt, dass die Gegenform (40) die Platte (21) mit weiter vorragendem Annäherungsrand (21A) stößt, wenn die Drehmomentstütze (10) in die falsche Richtung liegt, was die falsche Montage der Drehmomentstütze (10) in dem Hilfsrahmen (20) unmöglich macht.

2. Verwechslungssicherung nach Anspruch 1, **dadurch gekennzeichnet, dass** die Gegenform (40) auf dem Teil des Einsatzes (12), der zu der Seite des kleinen Gelenks (19) der Drehmomentstütze (10) gerichtet ist, positioniert ist.

3. Verwechslungssicherung nach einem der Ansprüche 1 und 2, **dadurch gekennzeichnet, dass** der Einsatz (12) metallisch ist und durch Formen gebildet wird.

4. Verwechslungssicherung nach Anspruch 3, **dadurch gekennzeichnet, dass** die Gegenform (40) metallisch, "einstückig" mit dem Einsatz (12) ist und durch denselben Formvorgang wie der Einsatz erhalten wird.

5. Verwechslungssicherung nach einem der Ansprüche 1 und 2, **dadurch gekennzeichnet, dass** der Einsatz (12) metallisch ist und durch Extrusion gefertigt wird.

6. Verwechslungssicherung nach einem der Ansprüche 3 und 5, **dadurch gekennzeichnet, dass** die Gegenform (40) in der Form eines Wulsts aus Elastomer, der oberhalb einer der Seiten des Einsatzes (12) befestigt ist, gefertigt ist.

7. Verwechslungssicherung nach einem der Ansprüche 3 bis 6, **dadurch gekennzeichnet, dass** die Gegenform (40) geneigt ist.

8. Nicht-symmetrische Drehmomentstütze eines Fahrzeugs, insbesondere eines Kraftfahrzeugs, die das Antriebsaggregat des Fahrzeugs mit dem Hilfsrahmen (20) des Fahrzeugs verbindet, **dadurch gekennzeichnet, dass** die Drehmomentstütze (10) eine Verwechslungssicherung nach einem der vorhergehenden Ansprüche umfasst.

## Claims

1. A false mounting prevention device for correct mounting of a non-symmetrical anti-torque rod (10) in the auxiliary frame (20) of a vehicle, the anti-torque rod (10) including an insert (12), which is intended to be inserted between two plates (21, 22) forming a yoke of the auxiliary frame (20) and which comprises a bore (15) for the passage of a fixing screw (30) of the anti-torque rod (10) in the auxiliary frame (20), one of the two plates (21) having an approach edge (21A) further forward than the approach edge (22A) of the other plate (22) along the direction of insertion ("M") of the anti-torque rod (10) in the auxiliary frame (20), said false mounting prevention device being constituted by a counter form (40) which projects from the external surface of the insert (12), such that said counter form (40) comes to hit the plate (21) having a further forward approach edge (21A) when the anti-torque rod (10) is in the wrong direction, which makes the incorrect mounting of the anti-torque rod (10) in the auxiliary frame (20) impossible.

2. The false mounting prevention device according to Claim 1, **characterized in that** the counter form (40) is positioned on the part of the insert (12) directed from the small articulation side (19) of the anti-torque rod (10).

3. The false mounting prevention device according to any one of Claims 1 and 2, **characterized in that** the insert (12) is metallic and is made by casting.

4. The false mounting prevention device according to Claim 3, **characterized in that** the counter form (40) is metallic, in one piece with the insert (12) and is obtained by the same casting operation as the insert.

5. The false mounting prevention device according to any one of Claims 1 and 2, **characterized in that** the insert (12) is metallic and is made by extrusion.

6. The false mounting prevention device according to any one of Claims 3 and 5, **characterized in that** the counter form (40) is made in the form of an elastomer bead fixed above one of the faces of the insert (12).

7. The false mounting prevention device according to any one of Claims 3 to 6, **characterized in that** the counter form (40) is inclined.

8. A non-symmetrical anti-torque rod of a vehicle, in particular of a motor vehicle, which connects the powertrain of the vehicle to the auxiliary frame (20) of the vehicle, **characterized in that** said anti-torque rod (10) comprises a false mounting prevention device according to any one of the preceding claims.
